# EUROPÄISCHE PATENTSCHRIFT

(11) **EP 2 640 598 B1**
(45) Veröffentlichungstag und Bekanntmachung des Hinweises auf die Patenterteilung: **25.06.2014**
(21) Anmeldenummer: 11770697.8
(22) Anmeldetag: 06.10.2011
(51) Int. Cl.: B60M 1/18

(54) **STRECKENTRENNER**
SECTION INSULATOR
ISOLATEUR DE SECTION

(30) Priorität: 16.11.2010 DE 102010051379
(43) Veröffentlichungstag der Anmeldung: 25.09.2013
(73) Patentinhaber: Furrer + Frey AG, 3005 Bern (CH)
(72) Erfinder: FURRER, Beat, CH-3012 Bern (CH); NÜNLIST, Felix, CH-3037 Herrenschwanden (CH); APICELLA, Daniele, I-00126 Roma (IT)
(74) Vertreter: von Bülow, Tam
(86) Internationale Anmeldenummer: PCT/EP2011/004980
(87) Internationale Veröffentlichungsnummer: WO 2012/065663

(56) Entgegenhaltungen:
- EP-B1- 0 592 819
- DE-A1- 2 837 370
- DE-B- 1 163 894
- FR-A5- 2 140 934
- GB-A- 912 211

## Beschreibung

Die Erfindung bezieht sich auf einen Streckentrenner gemäß dem Oberbegriff des Patentanspruches 1. Ein solcher Streckentrenner ist aus der GB 912 211 A bekannt. Dort sind zwei Fahrdrähte mit einem Streckentrenner verbunden, wobei jeder Fahrdraht in zwei parallele Äste aufgespalten ist, und zwar eine Leitkufe und eine Isolierkufe, wobei jeweils die Leitkufe und die Isolierkufe einer Seite miteinander verbunden sind und diese Paare gegenüber einer Mittellinie spiegelsymmetrisch angeordnet sind. Die Isolierkufe ist dabei an einer Hilfskufe durch Exzentereinrichtungen höhenverstellbar befestigt.

Die EP 0 592 819 B1 zeigt einen Streckentrenner für Fahrleitungen, bei denen das jeweilige Fahrdrahtende mit je einer Anschlussvorrichtung für das jeweilige Fahrdrahtende einerseits und einem jeweiligen Lichtbogenhorn andererseits verbunden ist], wobei die Anschlussvorrichtungen über Isolierkufen derart miteinander verbunden sind, dass sich die Lichtbogenhörner an einer Trennstelle isoliert gegenüberstehen, wobei an der Trennstelle wenigstens zwei diese überbrückende Leitkufen angeordnet sind, die jeweils mit einer der Isolierkufen mechanisch verbunden sind und beide mit einem der Lichtbogenhörner elektrisch leitend verbunden sind.

Die DE 28 37 370 A1 zeigt eine Verbindungsvorrichtung für elektrische Fahrdrähte, die über Hänger an einem Tragseil aufgehängt sind. Auch hier ist für einen Streckentrenner der jeweilige Fahrdraht in eine Leitkufe und eine Isolierkufe aufgeteilt, wobei diese durch einen quer zu Längserstreckung des Fahrdrahtes verlaufenden Isolator im Abstand zueinander gehalten werden und der Isolator über Hänger an dem Tragseil befestigt ist.

Die DE 11 63 894 B zeigt einen ähnlichen Streckentrenner, bei dem ebenfalls ein quer zu Längserstreckung des Fahrdrahtes angeordneter Isolator die jeweiligen Zweige trennt.

Die FR 2 140 934 A5 zeigt ebenfalls einen Streckentrenner mit in jeweils eine Leitkufe und eine Isolierkufe aufgespreizten Fahrdrähten.

Die bekannten Kufen verlaufen schräg in Bezug auf die Längsachsen der Stromschienen und haben ein freies, unbefestigtes Ende, das in Richtung zur jeweils gegenüberliegenden Stromschiene weist. Insoweit handelt es sich um ein offenes System. Weiter sind die freien Enden der elektrisch leitfähigen Kufen jeweils nach oben von der Fahrebene weggebogen, um einen sanften Einlauf des Stromabnehmers eines Fahrzeuges zu erreichen und ein "Einfädeln" des Stromabnehmers oder einen Stoß beim Anfahren des freien Endes der Kufe zu vermeiden.

Im Bereich der zwei antiparallelen Kufen besteht jedoch das Problem, daß einerseits durch die aufgebogenen freien Enden der Kufen und andererseits durch nicht exakte Montage nur eine Kufe des Stromabnehmers beschliffen wird. Dabei bildet sich in dem nur geringen Luftspalt zwischen der nicht beschleiften aber unter Spannung stehenden Kufe und dem Stromabnehmer ein elektrisches Feld aus, das um so stärker ist, je kleiner der Luftspalt ist. Als Folge der großen Feldstärke in diesem Bereich kann es zu einem Funkenüberschlag kommen. Jeglicher Funkenüberschlag ist aber unerwünscht, da er einen sukzessiven Abbrand und Verschleiß am Fahrdraht und am Stromabnehmer hervorruft und induktionsbedingte Spannungsspitzen erzeugt, die den Elektromotor des Fahrzeugs schädigen können. Werden beide Kufen beschleift, so erfolgt dies aufgrund der genannten Ungenauigkeiten mit unterschiedlich großen Kontaktkräften, wodurch sich unterschiedlich große und in der Praxis stark schwankende Übergangswiderstände an den beiden Kontaktstellen zwischen Fahrdraht und Stromabnehmer einstellen, was unerwünscht ist. Außerdem können die Kufen aufgrund ihrer freien Enden beim Kontakt mit dem Stromabnehmer zu mechanischen Schwingungen auch senkrecht zur Fahrebene angeregt werden, was wiederum zu Luftspalten sowie unterschiedlichen Kontaktkräften führt. Vor allem werden die sehr elastisch gelagerten Schleifleisten am Stromabnehmer hierbei zu Schwingungen angeregt.

Weiter kann es auch dazu kommen, daß der Berührpunkt zwischen der Kufe und dem Stromabnehmer mehrmals von einer zur anderen Kufe "springt", wodurch jedesmal ein Kraftstoß am Stromabnehmer entsteht. Dieser Kraftstoß ist um so größer je größer die Fahrgeschwindigkeit ist. Aufgrund des für die elektrische Isolation zwischen den beiden Kufen notwendigen großen zweiten Abstandes greifen die Kraftstöße relativ weit außermittig an der Schleifleiste des Stromabnehmers an, weshalb die auftretenden Kraftstöße unerwünschte Drehmomentstöße am Stromabnehmer hervorrufen und diese entsprechend stark ausgelenkt wird.

Die EP 0 052 176 B1 zeigt einen Streckentrenner für an Kettentragwerken aufgehängte Fahrdrähte, deren gegenüberliegende Enden einen Abstand zueinander haben. Die beiden Enden der Fahrdrähte sind über parallel zueinander verlaufende Isolierleisten miteinander verbunden, die vom Stromabnehmer eines vorbeifahrenden Fahrzeuges beschliffen werden. An den Enden der beiden Fahrdrähte ist noch ein Funkenhorn angebracht. Im Übergangsbereich zwischen den beiden Fahrdrähten beschleift die Schleifleiste des Fahrzeuges nur die Isolierleisten, so daß das Fahrzeug keine Stromversorgung hat. Aufgrund der Induktivität der Elektromotoren des Fahrzeuges können hohe Spannungsspitzen entstehen, weshalb die Funkenhörner vorgesehen sind. Gleichwohl ist die Funkenbildung aus den oben geschilderten Gründen unerwünscht.

Die EP 0 592 819 B1 zeigt einen Streckentrenner für an Kettentragwerken aufgehängte Fahrdrähte, deren gegenüberliegende Enden durch elektrisch isolierende Kufen miteinander verbunden sind. An beide Enden der Fahrdrähte sind Lichtbogenhörner mit Auflaufkufen befestigt, die in einen ersten Abstand zwischen den beiden Fahrdrähten hineinragen und zueinander einen zweiten Abstand aufweisen. An eines der beiden Lichtbogenhörner sind elektrisch leitfähige Kufen angeschlossen, die parallel zu den Isolierkufen verlaufen und so weit in Richtung des gegenüberliegenden Lichtbogenhornes verlaufen, daß die Trennstelle zwischen den beiden gegenüberliegenden Leitkufen hinreichend gut überbrückt wird. Die zur Fahrebene weisenden Unterseiten der Ablaufkufen, der Isolierkufen und der Leitkufen sollen dort exakt in einer Ebene liegen und vorzugsweise selber flach ausgebildet sein. Zusätzlich sollen die beiden Isolierkufen noch einen Lichtbogenschutz haben, so daß insgesamt sieben Elemente, nämlich zwei Leitkufen, zwei Isolierkufen, zwei Lichtbogenschutzeinrichtungen und eine Ablaufkufe von dem Stromabnehmer beschliffen werden sollen. Problematisch ist es allerdings, sieben Elemente exakt in einer Ebene auszurichten. Auch können durch unterschiedlichen Verschleiß, wie z.B. Abrieb oder Abbrand die einzelnen Elemente unterschiedlich stark abgenutzt werden, so daß es wiederum zu Luftspalten und damit Funkenbildung zwischen Schleifleiste und den elektrisch leitfähigen Kufen kommt.

Die JP 60234034 A zeigt einen Streckentrenner für an Kettentragwerken aufgehängte Fahrdrähte, deren Enden im Bereich des Streckentrenners seitlich gegenläufig ausgelenkt sind und antiparallel im Abstand zueinander verlaufen. Die freien Enden der Fahrdrähte sind über einen Isolator mit dem jeweils anderen Fahrdraht verbunden. Weiter sind die Fahrdrähte im Bereich des Streckentrenners aus der Fahrebene heraus nach oben abgebogen, so daß sie sich in Seitenansicht kreuzen. Die Schleifleiste eines vorbeifahrenden Fahrzeuges muß der Höhenänderung folgen, wenn ein stetiger Kontakt zum Fahrdraht beibehalten werden soll, was bei höheren Geschwindigkeiten nicht möglich ist. Somit treten ebenfalls die eingangs geschilderten Probleme auf.

Aufgabe der vorliegenden Erfindung ist es, den Strekkentrenner der eingangs genannten Art dahingehend weiter zu verbessern, daß er bei starren Stromschienen einen stetigen Kontakt zwischen Stromabnehmer und Fahrdraht gewährleistet und die Probleme der Funkenbildung vermieden werden. Dies beinhaltet alle eingangs genannten Probleme, die zu einer Funkenbildung führen können.

Diese Aufgabe wird durch die im Patentanspruch 1 angegebenen Merkmale gelöst. Vorteilhafte Ausgestaltungen und Weiterbildungen der Erfindung sind den Unteransprüchen zu entnehmen.

Die Grundidee der Erfindung liegt darin, daß der Streckentrenner geschlossene Kufen in einer Ebene anordnet, die sich überschneiden, so daß die Gleitkufe eines Stromabnehmers stets mit einer unter elektrischer Spannung stehenden Leitkufe in Kontakt ist, wobei jede Leitkufe über eine Isolierkufe mit der gegenüberliegenden Stromschiene verbunden ist. Die Leitkufen haben einen Isolierabstand zueinander. Die Schleifleiste des Stromabnehmers ist beim Überfahren des gesamten Streckentrenners immer mit zwei in einer Ebene liegenden Kufen in Berührung, da die Schleifleisten symmetrisch beansprucht über den Streckentrenner geführt werden. Durch das mechanisch geschlossene System werden Schwingungen weitestgehend eliminiert, wodurch auch die Gefahr der Funkenbildung eliminiert wird.

Im folgenden wird die Erfindung anhand eines Ausführungsbeispieles im Zusammenhang mit der Zeichnung ausführlicher erläutert. Es zeigt:
- Fig. 1: eine perspektivische Ansicht eines Streckentrenners nach der Erfindung gesehen schräg von oben;
- Fig. 2: eine Seitenansicht des Streckentrenners nach der Erfindung;
- Fig. 3: eine Draufsicht auf den Streckentrenner der Fig. 2;
- Fig. 4: einen Schnitt längs der Linie A-A der Fig. 2;
- Fig. 5: einen Schnitt längs der Linie B-B der Fig. 2;
- Fig. 6: einen Schnitt längs der Linie C-C der Fig. 2;
- Fig. 7: einen Schnitt längs der Linie E-E der Fig. 2;
- Fig. 8: eine vergrößerte Ansicht der Einzelheit D der Fig. 1;
- Fig. 9: eine vergrößerte Darstellung einer Einzelheit F der Fig. 3;
- Fig. 10: eine Seitenansicht eines bei der Erfindung verwendeten ersten Funkenhornes;
- Fig. 11: eine Stirnansicht des Funkenhornes der Fig. 10;
- Fig. 12: eine Seitenansicht eines bei der Erfindung verwendeten zweiten Funkenhornes;
- Fig. 13: eine Draufsicht des Funkenhornes der Fig. 12;
- Fig. 14: eine Seitenansicht der bei dem Streckehtrenner verwendeten Stromschienen; oder anderen Stromschienen.
- Fig. 15: einen Schnitt längs der Linie G-G der Fig. 14;
- Fig. 16: einen Schnitt längs der Linie H-H der Fig. 14;
- Fig. 17: einen Schnitt längs der Linie J-J der Fig. 14;
- Fig. 18: eine Seitenansicht einer Leitkufe des Strekkentrenners;
- Fig. 19: eine Draufsicht auf die Leitkufe der Fig. 18;
- Fig. 20: eine vergrößerte Darstellung der Einzelheit A der Fig. 19;
- Fig. 21: eine Seitenansicht einer Isolierkufe des Streckentrenners;
- Fig. 22: eine Draufsicht des Streckentrenners der Fig. 21;
- Fig. 23: eine Draufsicht eines Isolierstabes des Streckentrenners;
- Fig. 24: eine um 90° gedrehte Seitenansicht des Streckentrenners der Fig. 23;
- Fig. 25: eine vergrößerte Stirnansicht des Streckentrenners der Fig. 24 gesehen in Richtung des Pfeiles K;
- Fig. 26: eine Draufsicht einer bei dem Streckentrenner verwendeten Anschlußplatte;
- Fig. 27: eine Stirnansicht der Anschlußplatte der Fig. 26;
- Fig. 28: eine Seitenansicht einer Distanzhülse, die bei dem Streckentrenner verwendet wird;
- Fig. 29: eine Stirnansicht der Distanzhülse der Fig. 28;
- Fig. 30: eine geschnittene Stirnansicht einer Exzenterhülse, die bei dem Streckentrenner verwendet wird;
- Fig. 31: eine geschnittene Seitenansicht der Exzenterhülse der Fig. 30;
- Fig. 32: eine Draufsicht einer Anschlußplatte zur Verbindung von Leit- und Isolierkufen des Streckentrenners mit einer Stromschiene; und
- Fig. 33: eine Stirnansicht der Anschlußplatte der Fig. 32.

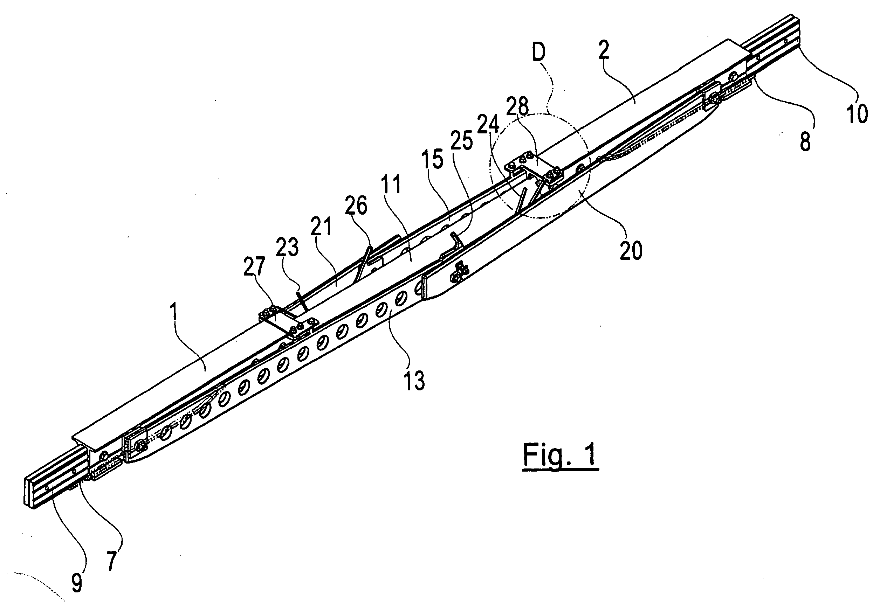

Zunächst wird auf die Figuren 1 bis 3 Bezug genommen. Der Streckentrenner hat eine erste Stromschiene 1 und eine zweite Stromschiene 2, die längs einer Fahrlinie 3 fluchtend zueinander ausgerichtet sind und deren Enden 4 bzw. 5 einen ersten Abstand 6 in Richtung der Fahrlinie 3 aufweisen. Beide Stromschienen 1 und 2 halten je einen Fahrdraht 7 bzw. 8, der sich von der jeweiligen Strecke kommend nur bis etwa in den mittleren Bereich der jeweiligen Stromschiene 1 oder 2 erstreckt und dessen Ende nach oben von der Fahrebene fort aufgebogen ist.

Die zur jeweiligen Strecke hinweisenden anderen Enden der Stromschienen 1 und 2 können über Stoßlaschen 9 und 10 bekannter Bauart (vgl. DE 20 2004 009 420 U1) mit weiteren Stromschienen verbunden sein, die die Fahrdrähte 7 und 8 halten.

Die beiden Stromschienen 1 sind über einen Isolierstab 11, der längs der Fahrlinie 3 verläuft, mechanisch miteinander verbunden, wobei die beiden Enden des Isolierstabes in das Profil der jeweiligen Stromschiene 1 bzw. 2 eingeführt und dort durch Schrauben 12 befestigt sind.

An eine Seite der ersten Stromschiene 1 ist eine Leitkufe 13 aus elektrisch leitfähigem Material, wie z.B. Kupfer, befestigt, die sich in den ersten Abstand 6 hinein erstreckt und über die Mitte 14 des Streckentrenners in Richtung zur zweiten Stromschiene 2 hinausragt. In analoger Weise ist auf der gegenüberliegenden Seite der zweiten Stromschiene 2 eine zweite Leitkufe 15 befestigt, die in analoger Weise in den Abstand 6 hineinragt und sich über die Mitte 14 des Streckentrenners in Richtung zur gegenüberliegenden ersten Stromschiene erstreckt. Die beiden Leitkufen 13 und 15 sind dabei nach außen von der Stromschiene fortweisend aufgebogen, so daß sie in der Mitte 14 einen quer zur Fahrlinie 3 gemessenen zweiten Abstand 16 aufweisen, der je nach Betriebsspannung so groß zu dimensionieren ist, daß kein Spannungsüberschlag stattfinden kann unter Berücksichtigung der Durchschlagspannung von Luft auch bei klimatisch ungünstigen Bedingungen.

Dem Fachmann ist klar, daß die Dimensionierung der Abstände 6 und 16 von der jeweiligen Betriebsspannung abhängen. Die in der Zeichnung abgebildeten Proportionen sind daher nur ein mögliches Beispiel und an die Fahrleitungsspannungen anzupassen, die beispielsweise 600 bis 3000 V Gleichspannung oder 1100 bis 35000 V Wechselspannung haben. Der Streckentrenner nach der Erfindung ist selbstverständlich für alle möglichen Spannungen einsetzbar.

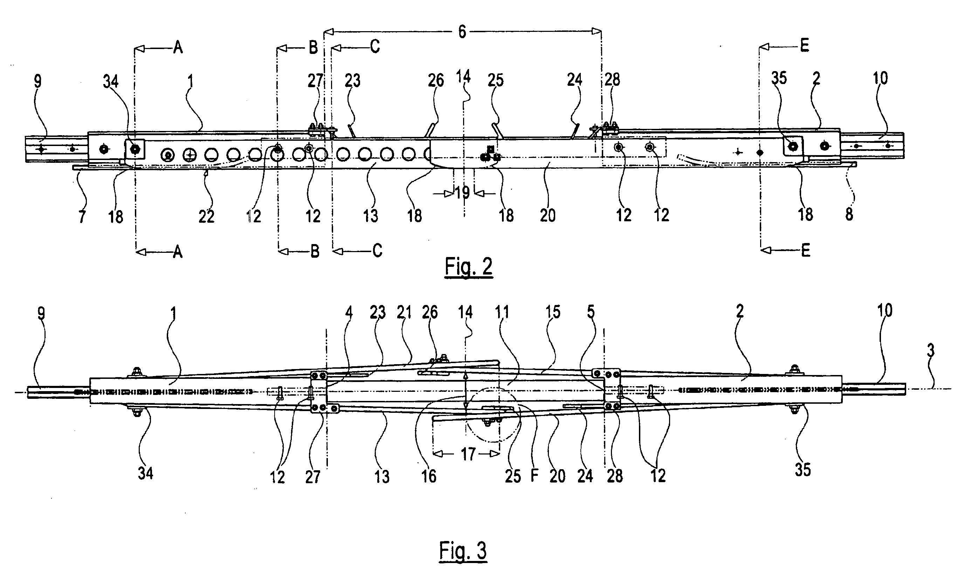

In der Seitenansicht der Fig. 2 überschneiden sich die beiden Leitkufen 13 und 14 in einem ersten Überlappungsbereich 17. Weiter sind die zur Fahrebene hinweisenden Unterseiten der beiden Leitkufen 13 und 14 an ihren Enden mit einer Auflauf- bzw. Ablaufrundung 18 versehen, so daß sich ein kürzerer effektiver zweiter Überlappungsbereich 19 ergibt.

Das zur zweiten Stromschiene 2 weisende Ende der ersten Leitkufe 13 ist mit einer ersten Isolierkufe 20 verbunden, deren anderes Ende mit der zweiten Stromschiene 2 verbunden ist, wobei auch die erste Isolierkufe 20 gegenüber der Fahrlinie 3 aufgebogen ist bzw. schräg verläuft.

In analoger Weise ist das zur ersten Stromschiene 1 weisende Ende der zweiten Leitkufe 15 über eine zweite Isolierkufe 21 mit der ersten Stromschiene 1 verbunden. Die jeweils mit der zugeordneten Leitkufe 13 bzw. 15 verbundenen Enden der Isolierkufen 20 und 21 haben ebenfalls Ablauf- bzw. Auflaufrundungen 18.

Die beiden Leitkufen 13 und 15 und die beiden Isolierkufen 20 und 21 sind gegenüber den beiden Stromschienen 1 und 2 so ausgerichtet, daß ihre zur Fahrebene und damit zur Schleifkufe eines Stromabnehmers eines Fahrzeuges weisende Unterseite in einer gemeinsamen Ebene zu den Fahrdrähten 7 und 8 liegt, wobei diese Ebene parallel zur Fahrebene liegen soll. Diese Ebene wird im folgenden Schleifebene 22 genannt.

Die beiden Leitkufen 13 und 15 und die beiden Isolierkufen 20 und 21 sind durch Exzenter in der Höhe verstellbar, so daß ihre Unterseiten exakt mit der durch die Fahrdrähte 7 und 8 bestimmten Schleifebene 22 ausgerichtet werden können. Der Übergang der Schleifkufe des Fahrzeuges vom jeweiligen Fahrdraht 7, 8 zu den Leitkufen 13, 15 und den Isolierkufen 20, 21 erfolgt somit sanft und ohne irgendwelche Stöße, so daß auch keine Schwingungen induziert werden und damit auch die Funkenbildung minimiert ist.

Für die Ableitung eventueller Funken sind noch insgesamt vier Funkenhörner 23 bis 26 vorgesehen. Ein erstes Funkenhorn 23 ist am Ende 4 der ersten Stromschiene auf der der ersten Leitkufe 13 gegenüberliegenden Seite befestigt. In analoger Weise ist ein zweites Funkenhorn 24 am Ende 5 der zweiten Stromschiene 2 gegenüberliegend zur zweiten Leitkufe 15 befestigt. Ein drittes Funkenhorn 25 ist an dem Ende der Leitkufe 13 befestigt, das mit der ersten Isolierkufe 20 verbunden ist. Das vierte Funkenhorn 26 schließlich ist am Ende der zweiten Leitkufe 15 befestigt, das mit der zweiten Isolierkufe 21 verbunden ist.

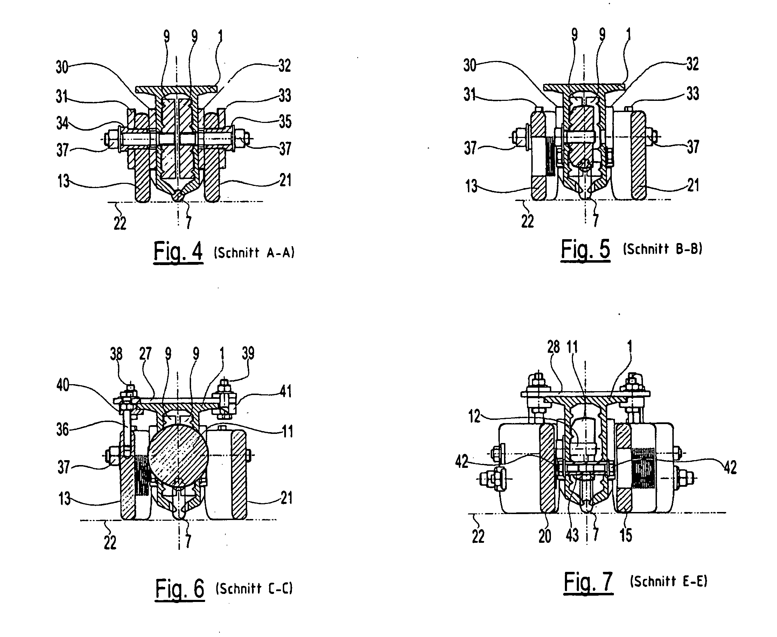

Weiter ist zur Höheneinstellung und zur seitlichen Aufspreizung der Leitkufen 13 und 15 je eine Anschlußplatte 27 und 28 vorgesehen, die einerseits nahe am Ende 4, 5 der jeweiligen Stromschiene 1, 2 befestigt ist und, wie detaillierter im Zusammenhang mit Fig. 6 beschrieben wird, mit einer Schraube in die Leitkufe 13, 15 eingreift, womit die Höhenlage der Leitkufe justiert werden kann.

Fig. 4 zeigt einen Querschnitt längs der Linie A-A der Fig. 2. Dort ist die Stelle gezeigt, an der die erste Leitkufe 13 und die zweite Isolierkufe 21 am streckenseitigen Ende der ersten Stromschiene 1 befestigt sind. Die erste Stromschiene 1 hat in diesem Bereich noch die zwei Stoßlaschen 9 zur Verbindung mit weiteren Stromschienen der Strecke. Auf einer Außenseite der Stromschiene 1 ist die erste Leitkufe 13 zwischen zwei Anschlußplatten 30 und 31 und auf der gegenüberliegenden Seite die zweite Isolierkufe 21 zwischen zwei Anschlußplatten 32 und 33 gehalten, wobei beide Kufen 13 und 21 an Exzenter-Buchsen 34 und 35 abgestützt sind, die durch Schrauben 37 gehalten sind. Die beiden Schrauben 37 durchdringen die Exzenter-Hülsen 34 bzw. 35 und die beiden inneren Anschlußplatten 30 bzw. 32 sowie die beiden Seitenwände der Stromschiene 1 und sind in Gewindebohrungen der Stoßlaschen 9 eingeschraubt.

Durch Verdrehen der Exzenter-Buchsen 34 und 35 mittels eines Werkzeuges, wie z.B. einem Schraubenschlüssel läßt sich die Höhenlage der Leitkufe 13 und der Isolierkufe 21 stufenlos verstellen, so daß insbesondere die Unterseite der Leitkufe 13 und der Isolierkufe 21 exakt in der Schleifebene 22 liegen. Auch ist hierüber bei eventuellem Verschleiß der Kufen oder des Fahrdrahtes 7 ein Nachjustieren ohne weiteres möglich.

Zur besseren und eindeutigen Fixierung sind zwischen den Stoßlaschen 9 und den Seitenwänden der Stromschiene 1 sind Vorsprünge und daran angepaßte Vertiefungen vorgesehen, so daß die Stoßlaschen auch formschlüssig im Profil der Stromschienen gehalten und dadurch eindeutig positioniert sind.

Fig. 5 zeigt einen Querschnitt längs der Linie B-B der Fig. 2, d.h. an der Stelle, an der der Isolierstab 11 mit der ersten Stromschiene 1 verbunden ist.

Der Isolierstab 11 ist an den beiden Enden, die in die Stromschienen 1 und 2 eingesteckt werden, im wesentlichen rechteckig und wird mit Schrauben 12 an einer der Seitenwände der Stromschiene 1 befestigt. Analog den Stoßlaschen 9 haben auch die Enden des Isolierstabes 11 eine zusätzliche formschlüssige Verbindung mit der Stromschiene durch Vorsprünge und daran angepaßte Vertiefungen. Sowohl die erste Leitkufe 13 als auch die zweite Isolierkufe 21 sind an dieser Stelle bereits in einem Abstand zu den Außenseiten der Stromschiene 1 bzw. 2 gehalten.

Weiter erkennt man in Fig. 5, daß der Fahrdraht 7 nach oben aus der Schleifebene 22 aufgebogen ist, da in diesem Bereich des Streckentrenners nur noch die Leitkufe 13 die Stromversorgung übernimmt.

Fig. 6 zeigt einen Schnitt längs der Linie C-C der Fig. 2, d.h. die Stelle der Anschlußplatte 27. Der Isolierstab 11 hat an dieser Stelle einen kreisrunden Querschnitt. Die Isolierplatte 27 liegt auf der Ober- seite der Stromschiene 1 auf und ist mit Schrauben 38 und 39 und Klemmkörpern 40 und 41, die die seitlichen Ränder der Stromschiene 1 übergreifen, an der Stromschiene 1 befestigt. Eine weitere Schraube 36 an der Anschlußplatte 27 ist in eine Gewindebohrung der ersten Leitkufe 13 eingeschraubt. Über diese Schraube 36 kann die Höhenlage der ersten Leitkufe 13 relativ zur ersten Stromschiene 1 eingestellt werden. Somit kann über die Exzenterhülse 34 (Fig. 4) und die Schraube 36 (Fig. 6) die Lage der ersten Leitkufe 13 exakt eingestellt werden. In analoger Weise gilt dies selbstverständlich auch für die zweite Leitkufe 15 in Verbindung mit der Anschlußplatte 28 und einer entsprechenden Schraube.

Fig. 7 zeigt einen Schnitt längs der Linie E-E der Fig. 2, d.h. eine Stelle, die zwischen der Stoßlasche 10 und dem Isolierstab 11 liegt. An dieser Stelle sind die beiden Spannarme der Stromschiene 2 durch eine Distanzhülse 43 mit Schraube 42 auseinander gedrückt, um den Fahrdraht 7 einlegen zu können. Später wird diese Distanzhülse 43 entfernt. Die Stromschiene hat entsprechende Löcher für den Durchtritt der Schrauben 42, wobei die Schraubenköpfe an Lochscheiben abgestützt sind, die an der Außenseite der Seitenwände der Stromschiene 2 aufliegen.

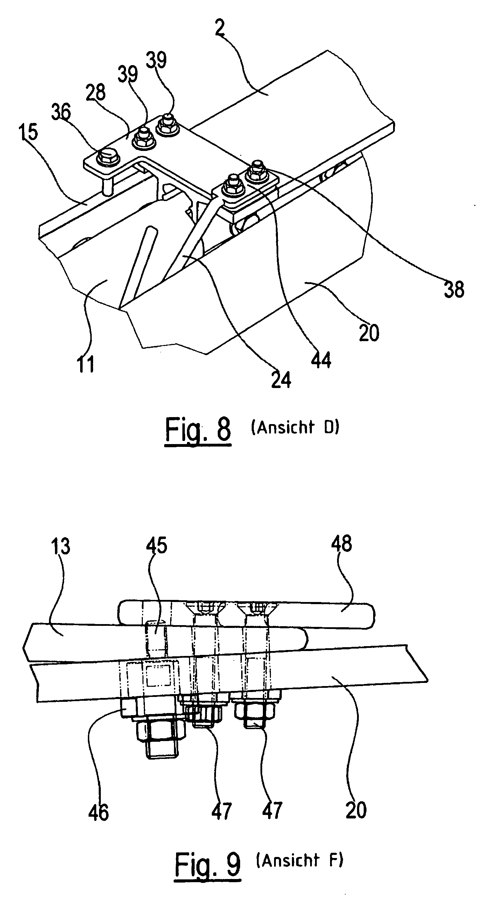

Fig. 8 zeigt eine perspektivische vergrößerte Ansicht der Einzelheit D der Fig. 1, d.h. auf die Anschlußplatte 28 mit dem Funkenhorn 24. Das Funkenhorn 24 ist als gebogener Rundstab ausgebildet, an dessen einem Ende eine ebene Platte 44 einstückig angebracht ist, die mit den Schrauben 38 an der Anschlußplatte 28 befestigt ist. Weiter erkennt man noch besser die Schraube 36 zur Höheneinstellung der Leitkufe 15.

Fig. 9 zeigt eine vergrößerte Abbildung der Einzelheit F der Fig. 3, d.h. die Verbindung zwischen der Leitkufe 13 und der Isolierkufe 20. Diese beiden Kufen müssen relativ zueinander ebenfalls in der Höhe verstellt werden können, damit alle Teile exakt in der Schleifebene liegen. Die Lage der Leitkufe 13 ist durch die Exzenterhülse 34 und die Schraube 36 exakt positioniert, so daß im Ergebnis nur noch die Lage der Isolierkufe 20 einzustellen ist. Hierzu haben im Verbindungsbereich die beiden Kufen 13 und 20 eine Bohrung, in die ein Stift 45 eingesetzt ist. Die außen liegende Isolierkufe 20 hat hierbei eine größere Bohrung, in die eine Exzenterhülse 46 eingesetzt ist, die den Stift 45 übergreift. Durch Verdrehen der Exzenterhülse 46 ist die Höhenlage der Isolierkufe 20 gegenüber der Leitkufe 13 einstellbar. Diese eingestellte Lage kann dann durch zwei Verschraubungen 47 fixiert werden, die die beiden Kufen 20 und 13 durchdringen und an Platte 48 des Funkenhornes 25 abgestützt sind.

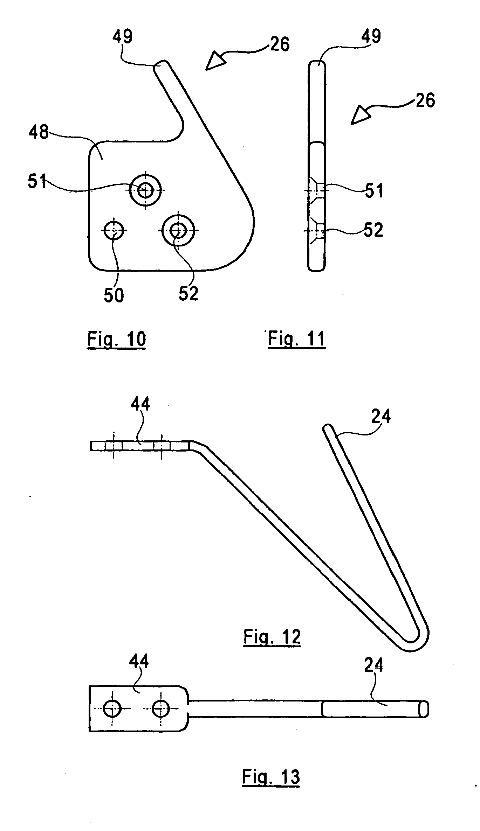

Die Fig. 10 und 11 zeigen eine Seitenansicht und eine Stirnansicht der Funkenhörner 25 und 26, die an der Verbindungsstelle zwischen der jeweiligen Leitkufe und der Isolierkufe angebracht sind. Sie bestehen aus der ebenen Platte 48, von der eine Funkenhornspitze 49 absteht. Die Platte 48 hat drei Bohrungen 50, 51 und 52. Die Bohrung 50 dient zur Aufnahme des Stiftes 45 (Fig. 9) während die Bohrungen 51 und 52 Senkkopfbohrungen sind, die die Verschraubungen 47 (Fig. 9) aufnehmen.

Die Fig. 12 und 13 zeigen eine Seitenansicht und eine Draufsicht der Funkenhörner 23 und 24, die jeweils an den Enden der Stromschienen 1 und 2 angebracht sind. Sie haben eine V-förmige Funkenableitspitze, die einstückig mit der ebenen Platte 44 verbunden ist, mit der das Funkenhorn an den Anschlußplatten 27 bzw. 28 (Fig. 8) über die Schrauben 38 befestigt wird.

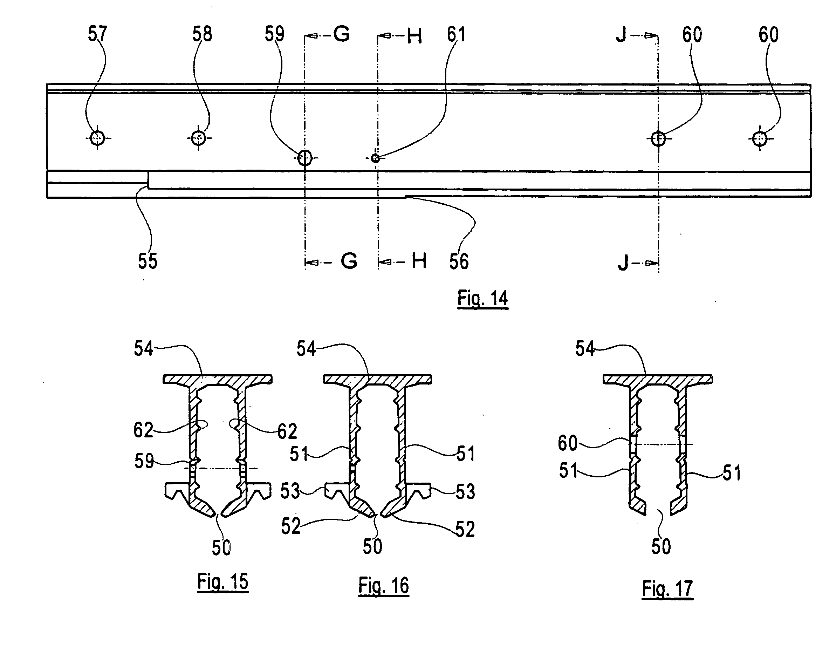

Die Fig. 14 bis 17 zeigen die erste Stromschiene 1. Fig. 14 ist eine Seitenansicht. Die Fig. 15, 16 und 17 sind Querschnitte längs den Linien G-G, H-H bzw. J-J.

Generell wird ein herkömmliches Stromlinienprofil verwendet, das für den Streckentrenner jedoch bearbeitet ist. Das herkömmliche Schienenprofil ist ein einstükkiges Profil, das im Strangziehverfahren aus Aluminium oder einer Aluminiumlegierung hergestellt werden kann. Sie bildet insgesamt ein weitestgehend geschlossenes und nur durch einen Längsschlitz 50 für die Aufnahme des Fahrdrahtes 7 unterbrochenes Kastenprofil, das den Fahrdraht durch Spannarme 51 und Klemmarme 52 hält. Am Übergangsbereich zwischen den Spannarmen 51 und den Klemmarmen 52 sind seitliche Kragarme 53 angebracht. Die gegenüberliegenden Enden der Spannarme 51 sind an einem Querträger 54 angeschlossen.

Für den Einsatz an dem Streckentrenner nach der Erfindung werden die Kragarme 53 nur bis zu einer Stelle 55 vom streckenseitigen Ende der Stromschiene geführt und von dort bis zum anderen Ende entfernt, damit die Leitkufen und die Isolierkufen an den Außenseiten der Spannarme 51 angebracht werden können und bis zur Schleifebene ragen.

Wie in Fig. 2 dargestellt ist der Fahrdraht 7 auch nur über einen Bereich der Stromschiene 1 eingespannt und im weiteren Verlauf nach oben abgebogen. Damit der Fahrdraht entsprechend verlegt werden kann, sind die Klemmarme 52 ab der Stelle 56 teilweise abgeschnitten, wie in der Schnittdarstellung J-J der Fig. 17 zu ersehen ist, wobei die verbleibenden Reste der Klemmarme dazu nicht mehr zur Schleifebene 22 ragen.

In der Seitenansicht der Fig. 14 sieht man verschiedene Bohrungen. Die Bohrung 57 dient für die Befestigungsschraube der Stoßlasche 9. Die Bohrung 58 dient für den Anschluß der Exzenterhülse 34. Die Bohrung 59 dient für die Gewindehülse 43 und die Schrauben 42 (Fig. 7) für das Verspannen und Justieren der Spannarme. Die Bohrungen 60 dienen für die Anbringung der Schrauben 12, mit denen der Isolierstab 11 an der Stromschiene befestigt wird.

Die Bohrung 61 ist eine Gewindebohrung die nur an einem der beiden Spannarme 51 angebracht ist. In diese Gewindebohrung wird beim Einlegen des Fahrdrahtes ein Schraube eingedreht, die die beiden Spannarme auseinander spreizt. Der Fahrdraht-Einziehwagen kann nämlich die Stromschiene wegen der fehlenden Kragarme 53 nur bis zur Stelle 55 öffnen. Wird in die Gewindebohrung 61 eine Schraube eingedreht, stützt sich diese auf dem gegenüberliegenden Spannarm ab und öffnet so das Profil für den Fahrdraht-Einzug. Die Schraube wird danach entfernt.

Weiter erkennt man in den Fig. 15 bis 17 noch, daß die Spannarme mehrere nach innen ragende Vorsprünge 62 aufweisen, die sich über die gesamte Profillänge erstrecken. Sie dienen zur formschlüssigen Verbindung mit den Stosslaschen 9 und den Enden des Isolierstabes 11, die jeweils entsprechend passende Rillen haben.

Die Beschreibung der Stromschiene 1 gilt in analoger Weise für die zweite Stromschiene 2, die spiegelsymmetrisch zur Mittellinie 14 (Fig. 2 und 3) angeordnet ist.

Weiter sei noch darauf hingewiesen, daß Distanzhülse 43 und die Verschraubung 42 der Sicherheit dienen und ein unerwünschtes "Herausfallen" des Fahrdrahtes verhindern.

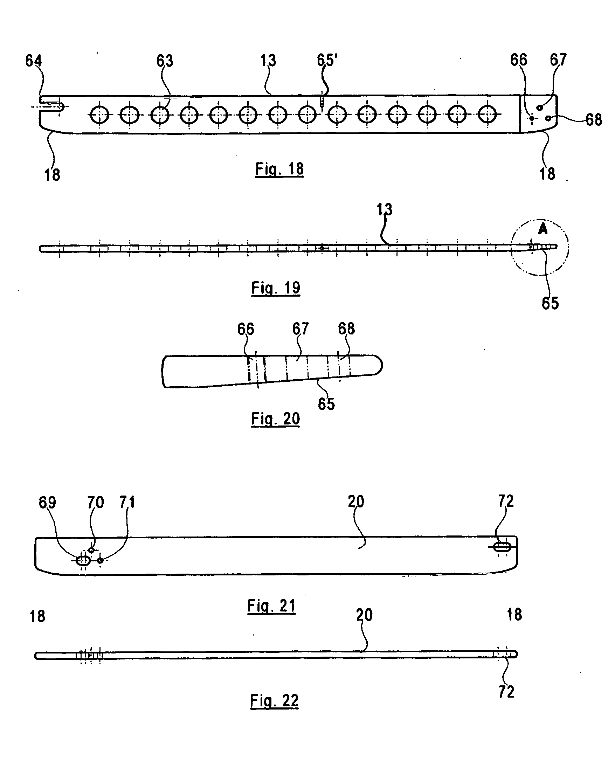

Die Fig. 18 und 19 zeigen die Leitkufe 13 in Seitenansicht und Draufsicht. Fig. 20 zeigt einen vergrößerten Ausschnitt A der Fig. 19 am Ende der Leitkufe. Die Leitkufe 13 ist ein langgestreckter, im wesentlichen geradliniger flacher Körper aus elektrisch gut leitfähigem Material, wie z.B. Kupfer. Seine eine Kante bildet eine Schleifkante, die in der Schleifebene 22 liegt. An beiden Enden ist die Schleifkante mit Ablauf- bzw. Auflaufrundungen 18 versehen. Längs des gesamten Körpers ist eine Vielzahl von Öffnungen 63 vorhanden, die in gleichmäßigen Abständen längs einer geraden Linie angeordnet sind und zur Material- und Gewichtseinsparung dienen sowie um an einigen Stellen Zugang zu Schrauben an der Stromschiene bzw. dem Isolierstab zu erhalten.

An einem Ende hat die Leitkufe eine nach außen hin offene Langlochöffnung 64 zur Aufnahme der Exzenterhülse 34. Am anderen Ende ist die Leitkufe, wie die Einzelheit A darstellt, mit einer Abschrägung 65 versehen, die drei Bohrungen 66, 67 und 68 aufweist, zur Aufnahme des Stiftes 45 (Fig. 9) und der Verschraubungen 47 (Fig. 9). Die Abschrägung 65 ist, wie ebenfalls in Fig. 9 dargestellt, so ausgebildet, daß sich die Leitkufe 13 und die Isolierkufe 20 plan berühren, obwohl sie, wie Fig. 2 zeigt, gegenüber der Längsachse 3 abgespreizt sind.

Die Fig. 21 und 22 zeigen die Isolierkufe 20 in Seitenansicht und Draufsicht. Eine Unterkante der Isolierkufe liegt ebenfalls in der Schleifebene 22. Auch die Isolierkufe ist im Bereich beider Enden mit einer Auflauf- bzw. Ablaufrundung 18 versehen. Im Bereich des einen Endes, das mit der Leitkufe 13 verbunden wird, sind drei Öffnungen, 69, 70 und 71 vorgesehen, die mit den Öffnungen 66, 67 und 68 fluchten, wobei die Öffnung 69 als Langloch ausgebildet ist, zur Aufnahme der Exzenterhülse 46. Am anderen Ende hat die Isolierkufe 20 ebenfalls ein Langloch 72 zur Aufnahme der Exzenterhülse 35.

Wie aus Fig. 2 zu erkennen ist, überlappen sich die Leitkufe 13 und die Isolierkufe 20 jedoch außerhalb der Mittellinie 14, so daß eine der beiden Kufen, hier die Isolierkufe 20 kürzer ist als die zugeordnete Leitkufe.

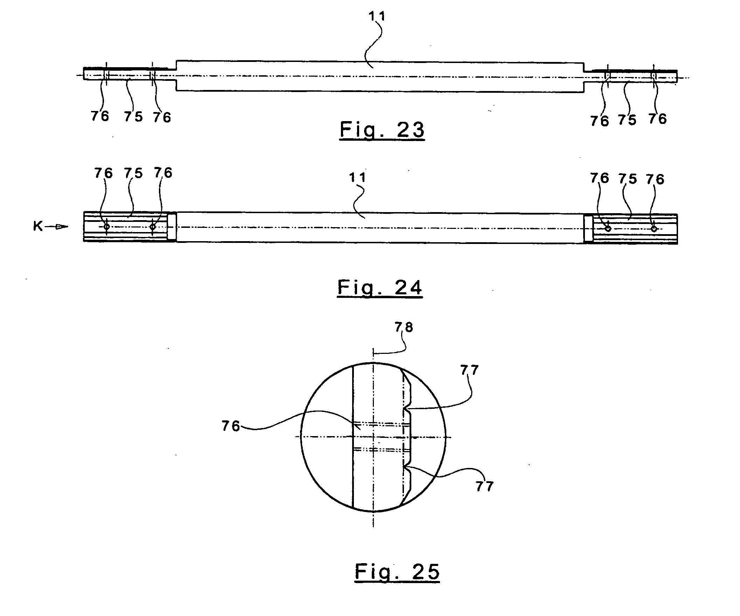

Die Fig. 23 bis 25 zeigen den Isolierstab 11, der die beiden Stromschienen 1 und 2 mechanisch miteinander verbindet. Fig. 25 zeigt eine vergrößerte Ansicht der Stirnseite des Isolierstabes 11 gesehen in Richtung des Pfeiles K. Der Isolierstab 11 ist ein langgestreckter Körper mit kreisrundem Profil (Fig. 25), das an beiden Enden zu einem im wesentlichen rechteckigen Profil 75 abgeflacht ist. Beide abgeflachten Profile 75 haben jeweils zwei Bohrungen 76 zur Aufnahme der Schrauben 12 (Fig. 3), mit denen der Isolierstab 11 an den beiden Stromschienen 1 und 2 befestigt ist. Eine Seite der abgeflachten Profile 75 hat Rillen 77, die an die Vorsprünge 62 (Fig. 15) der Stromschiene angepaßt sind. Weiter ist Fig. 25 zu entnehmen, daß das abgeflachte Profil 76 außermittig - bezogen auf eine Mittelachse 78 - liegt, wobei die Breite des Profiles 75 schmaler ist als der Abstand zwischen den beiden Spannarmen 51 (Fig. 17), so daß das abgeflachte Profil 75 nur an einem der beiden Spannarme 51 anliegt und dort befestigt wird.

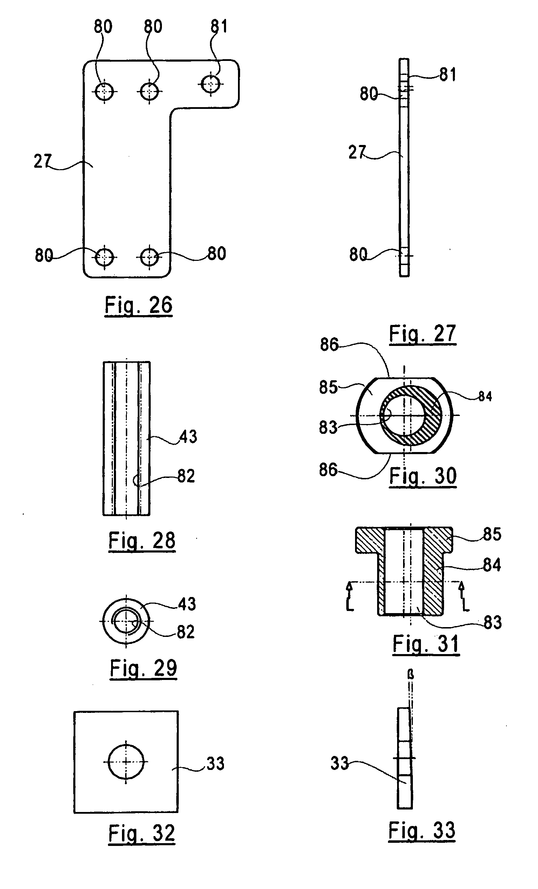

Fig. 26 zeigt die Anschlußplatten 27 und 28, an denen die Funkenhörner 23 und 24 befestigt sind und die Schraube 36 für die Höheneinstellung der jeweiligen Leitkufe. Die Anschlußplatte 27 ist eine ebene L-förmige Platte mit sechs Bohrungen, von denen vier mit 80 bezeichnet sind zur Aufnahme der Schrauben 38 und 39 (Fig. 6), mit denen die Anschlußplatte an der Stromschiene 1 bzw. 2 befestigt wird. Die an dem kurzen L-Schenkel vorhandene Bohrung 81 nimmt die Einstellschraube 36 für die Höheneinstellung der Leitkufe auf.

Die Fig. 28 und 29 zeigen die Distanzhülse 43 in Seiten- und Stirnansicht. Wie schon erwähnt, dient diese Hülse zum Aufspreizen der Spannarme 51 (Fig. 17) beim Einlegen des Fahrdrahtes 7. Die Distanzhülse 43 hat eine durchgehende Gewindebohrung 82, so daß von beiden Seiten her Schrauben 42 (Fig. 7) eingeschraubt werden können.

Die Fig. 30 und 31 zeigen die Exzenterhülse, die zur Höheneinstellung der Leitkufen und der Isolierkufen verwendet wird, wie beispielsweise in Zusammenhang mit den Exzenterhülsen 34 und 35 (Fig. 2 und 3) und der Exzenterhülse 46 (Fig. 9) beschrieben ist. Die Exzenterhülse hat eine zentrische Bohrung 83 und einen dazu exzentrisch versetzten kreisrunden Exzenterkörper 84, der an einem Kopf 85 einstückig angeformt ist, wobei der Kopf 85 zwei gegenüberliegende parallele plane Flächen 86 aufweist, an denen ein Schraubenschlüssel zum Verdrehen der Exzenterhülse angesetzt werden kann. Die zentrale Bohrung 83 nimmt die Schrauben 37 (Fig. 4) oder den Stift 45 auf, die als Führung für die Exzenterhülse dienen. Die Fig. 31 ist dabei eine geschnittene Seitenansicht. Die Fig. 30 ist ein Querschnitt gesehen längs der Linie L-L der Fig. 31.

Die Fig. 32 und 33 zeigen die Anschlußplatten 30 und 32 (Fig. 4), die am jeweilig streckenseitigen Ende der Leitkufen und der Isolierkufen zwischen die Außenseite der Stromschiene und die jeweilige Kufe eingesetzt sind. Diese Anschlußplatten sind in der Draufsicht der Fig. 32 quadratisch und in der Seitenansicht der Fig. 33 unter einem Winkel β abgeschrägt, wobei dieser Winkel in der Größenordnung von 15° liegt. Unter diesem Winkel verlaufen die Kufen gegenüber der Stromschiene, so daß die beschriebene Abspreizung stattfindet.

Zusammenfassend schafft die Erfindung somit einen mechanisch sehr stabilen Streckentrenner mit einem mechanisch geschlossenem System, das sicherstellt, daß ein Stromabnehmer eines vorbeifahrenden Fahrzeuges stets in elektrischem Kontakt mit einer spannungsführenden Kufe steht, wobei alle Elemente so justierbar sind, daß eine exakte Positionierung gewährleistet ist, die eine Funkenbildung unterbindet. Aufgrund des geschlossenen Systems sind auch mechanische Schwingungen, welche die Schleifleisten des Stromabnehmers anregen und zur Funkenbildung führen können, weitestgehend ausgeschlossen.

## Patentansprüche

1. Streckentrenner für zwei linienflüchtige starre Stromschienen (1, 2), deren gegenüberliegende Enden (4, 5) einen ersten Abstand (6) zueinander haben und die jeweils mit einer ersten bzw. zweiten Leitkufe (13, 15) verbunden sind, wobei die beiden Leitkufen (13, 15) in den ersten Abstand (6) hineinragen, ihre zu einer Fahrebene weisenden Seiten in einer Schleifebene (22) angeordnet sind und die beiden Leitkufen (13, 15) sich in Längsrichtung (3) der Stromschienen (1, 2) überlappen und antiparallel zueinander in einem zweiten Abstand (16) zueinander verlaufen, wobei:
die erste Leitkufe (13) mit einer ersten Isolierkufe (20) verbunden ist,
die erste Isolierkufe (20) mit der zweiten Stromschiene (2) verbunden ist,
die zweite Leitkufe (15) mit einer zweiten Isolierkufe (21) verbunden ist,
die zweite Isolierkufe (21) mit der ersten Stromschiene (1) verbunden ist und die zur Fahrebene weisenden Kanten der Leitkufe (13, 15) und der Isolierkufen (20, 21) in der Schleifebene (22) liegen, wobei die Leitkufe (13, 15) und die Isolierkufen (20, 21) relativ zu den Stromschienen (1, 2) in ihrer Höhenlage einstellbar sind, **dadurch gekennzeichnet,**
**daß** die Leitkufen (13, 15) und die Isolierkufen (20, 21) an ihren zur benachbarten Stromschiene (1, 2) weisenden Enden mittels Exzenterhülsen (34, 35) relativ zur Stromschiene (1, 2) höhenverstellbar sind,
**daß** die Leitkufen (13, 15) zusätzlich durch eine vertikal zur Schleifebene (22) angeordnete Schraube (36) höhenverstellbar sind, wobei die Schraube (36) an der zugeordneten Stromschiene (1, 2) abgestützt, in eine Gewindebohrung der Leitkufe (1, 2) einschraubbar ist und gegenüber der Exzenterhülse (34, 35) in Längsrichtung der Stromschiene (1, 2) versetzt angeordnet ist, und
**daß** an der Verbindung zwischen den Leitkufen (13, 15) und den zugeordneten Isolierkufen (20, 21) eine weitere Exzenterhülse (46) zur relativen Höhenverstellung angeordnet ist.

2. Streckentrenner nach Anspruch 1, **dadurch gekennzeichnet, daß** die Leitkufen (13, 15) und die Isolierkufen (20, 21) jeweils unter einem Winkel (β) zur Fahrlinie (3) verlaufen.

3. Streckentrenner nach Anspruch 2, **dadurch gekennzeichnet, daß** der Winkel (β) zwischen 10° und 20° vorzugsweise bei 15° liegt.

4. Streckentrenner nach einem der Ansprüche 1 bis 3, **dadurch gekennzeichnet, daß** die beiden Stromschienen (1, 2) durch einen Isolierstab (11) mechanisch miteinander verbunden sind, wobei der Isolierstab (15) zwischen den Leitkufen (13, 15) und den Isolierkufe (20, 21) angeordnet ist und oberhalb der Schleifebene (22) liegt.

5. Streckentrenner nach einem der Ansprüche 1 bis 4, **dadurch gekennzeichnet, daß** Enden der Fahrdrähte (7, 8) aus der Schleifebene (22) von der Fahrebene fortweisend abgebogen sind.

6. Streckentrenner nach einem der Ansprüche 1 bis 5, **dadurch gekennzeichnet, daß** jeweils beide Enden beider Leitkufen (13, 15) und beider Isolierkufen (20, 21) von der Schleifebene (22) fortweisende Ablauf-/Auflaufrundungen (18) aufweisen.

## Claims

1. Section insulator for two aligned rigid conductor rails (1, 2), the opposing ends (4, 5) of which have a first distance (6) to each other, and which are each connected with a first and/or second conductive runner (13, 15), wherein the two conductive runners (13, 15) protruding into the first distance (6), their sides facing the travel plane being arranged in a contact plane (22), and the two conductive runners (13, 15) overlapping in longitudinal direction (3) of the conductor rails (1, 2), and running antiparallel to each other in a second distance (16), wherein:
the first conductive runner (13) is connected with a first insulating runner (20),
the first insulating runner (20) is connected with the second conductor rail (2),
the second conductive runner (15) is connected with a second insulating runner (21),
the second insulating runner (21) is connected with the first conductor rail (1), and the edges of the conductive runners (13, 15) and the insulating runners (20, 21) facing the travel plane are arranged in the contact plane (22) wherein the conductive runners (13, 15) and the insulating runners (20, 21) are height-adjustable in relation to the conductor rails (1, 2) **characterized in that**
the conductive runners (13, 15) and the insulating runners (20, 21) on their ends facing the adjacent conductor rail (1, 2) are height-adjustable by means of eccentric sleeves (34, 35) in relation to the conductor rail (1, 2),
**in that** the conductive runners (13, 15) in addition are height-adjustable by a screw (36) arranged vertically to the contact plane (22), with the screw (36) being supported on the assigned conductor rail (1, 2), being threadable into a threaded hole of the conductive runner (1, 2), and being arranged offset in longitudinal direction of the conductor rail (1, 2) and
**in that** on the connection between the conductive runners (13, 15) and the assigned insulating runners (20, 21) another eccentric sleeve (46) is arranged for relative height adjustment.

2. Section insulator according to claim 1, **characterized in that** the conductive runners (13, 15) and the insulating runners (20, 21) each extend under an angle (β) to the travel line (3).

3. Section insulator according to claim 2, **characterized in that** the angle (β) is comprised between 10° and 20°, preferable at 15°.

4. Section insulator according to any one of claims 1 to 3, **characterized in that** the two conductor rails (1, 2) are mechanically connected with each other by an insulating rod (11), with the insulating rod (15) being arranged between the conductive runners (13, 15) and the insulating runners (20, 21), and being located above the contact plane (22).

5. Section insulator according to any one of claims 1 to 4, **characterized in that** ends of the contact wires (7, 8) from the contact plane (22) are bent off facing away from the travel plane.

6. Section insulator according to any one of claims 1 to 5, **characterized in that** both ends each of both conductive runners (13, 15) and both insulating runners (20, 21) comprise ramp and/or lead roundings (18) facing away from the contact plane (22).

## Revendications

1. Isolateur de section pour deux rails de contact (1, 2) rigides alignés, dont les extrémités (4, 5) opposées présentent un premier espacement (6) l'une par rapport à l'autre, et qui sont reliés respectivement à un premier ou à un deuxième patin conducteur (13, 15), dans lequel les deux patins conducteurs (13, 15) font saillie dans le premier espacement (6), leurs côtés orientés en direction d'un plan de guidage sont disposés dans un plan de frottement (22), les deux patins conducteurs (13, 15) se chevauchent dans la direction longitudinale (3) des rails de contact (1, 2) et s'étendent l'un par rapport à l'autre dans un deuxième espacement (16) de manière antiparallèle l'un par rapport à l'autre,
dans lequel:
le premier patin conducteur (13) est relié à un premier patin d'isolation (20),
le premier patin d'isolation (20) est relié au deuxième rail de contact (2),
le deuxième patin conducteur (15) est relié à un deuxième patin d'isolation (21),
le deuxième patin d'isolation (21) est relié au premier rail de contact (1) et les bords des patins conducteurs (13, 15) et des patins d'isolation (20, 21) orientés en direction du plan de guidage se trouvent dans le plan de frottement (22), les patins conducteurs (13, 15) et les patins d'isolation (20, 21) peuvent être réglés dans leur position en hauteur par rapport aux rails de contact (1, 2), **caractérisé en ce que** les patins conducteurs (13, 15) et les patins d'isolation (20, 21) peuvent être déplacés en hauteur par leurs extrémités orientées en direction du rail de contact (1, 2) adjacent au moyen de douilles excentriques (34, 35) par rapport au rail de contact (1, 2),
**en ce que** les patins conducteurs (13, 15) peuvent être déplacés en hauteur en complément par une vis (36) disposée de manière verticale par rapport au plan de frottement (22), sachant que la vis (36) s'appuie au niveau du rail de contact (1, 2) associé, qu'elle peut être vissée dans un alésage taraudé du patin conducteur (1, 2) et qu'elle est disposée de manière décalée par rapport à la douille excentrique (34, 35) dans la direction longitudinale du rail de contact (1, 2), et
**en ce qu'**une douille excentrique (46) supplémentaire est disposée aux fins du déplacement relatif en hauteur au niveau de la jonction entre les patins conducteurs (13, 15) et les patins d'isolation (20, 21) associés.

2. Isolateur de section selon la revendication 1, **caractérisé en ce que** les patins conducteurs (13, 15) et les patins d'isolation (20, 21) s'étendent respectivement selon un angle (ß) par rapport à la ligne de déplacement (3).

3. Isolateur de section selon la revendication 2, **caractérisé en ce que** l'angle (ß) présente une valeur comprise entre 10° et 20°, de préférence de 15°.

4. Isolateur de section selon l'une quelconque des revendications 1 à 3, **caractérisé en ce que** les deux rails de contact (1, 2) sont mécaniquement reliés l'un à l'autre par une barre d'isolation (11), laquelle barre d'isolation (11) étant disposée entre les patins conducteurs (13, 15) et les patins d'isolation (20, 21) et se trouvant au-dessus du plan de frottement (22).

5. Isolateur de section selon l'une quelconque des revendications 1 à 4, **caractérisé en ce que** des extrémités des fils de contact (7, 8) sont recourbées à partir du plan de frottement (22) de manière à s'éloigner du plan de guidage.

6. Isolateur de section selon l'une quelconque des revendications 1 à 5, **caractérisé en ce que** respectivement deux extrémités des deux patins conducteurs (13, 15) et des deux patins d'isolation (20, 21) présentent des arrondis (18) longitudinaux d'entrée/de sortie s'éloignant du plan de frottement (22).
